# EUROPÄISCHE PATENTSCHRIFT

(11) **EP 1 119 484 B1**
(45) Veröffentlichungstag und Bekanntmachung des Hinweises auf die Patenterteilung: **02.01.2004**
(21) Anmeldenummer: 99900056.5
(22) Anmeldetag: 13.10.1999
(51) Int. Cl.: B62D 1/04, B60R 16/00

(54) **LENKRAD MIT KONTAKTBRÜCKE**
STEERING WHEEL WITH A MOVING CONTACT
VOLANT DOTE DE PONTS DE CONTACT

(30) Priorität: 15.10.1998 DE 29819044 U
(43) Veröffentlichungstag der Anmeldung: 01.08.2001
(73) Patentinhaber: Takata-Petri AG, 63743 Aschaffenburg (DE)
(72) Erfinder: SAKAGUCHI, Takashi, D-63776 Mömbris (DE)
(74) Vertreter: Baumgärtel, Gunnar, Dr.
(86) Internationale Anmeldenummer: PCT/DE1999/003311
(87) Internationale Veröffentlichungsnummer: WO 2000/023312

(56) Entgegenhaltungen:
- DE-A- 19 653 684
- DE-U- 29 819 044
- US-A- 5 738 369

## Beschreibung

Die Erfindung betrifft ein Lenkrad mit Kontaktbrücke nach dem Oberbegriff des Anspruchs 1.

Lenkräder mit Kontaktbrücken für die Betätigung der Hupe in Kraftfahrzeugen sind bekannt. Die Kontaktbrücke ist bei bekannten Lenkrädern an einigen Stellen über jeweils eine Druckfeder und jeweils einen Bolzen so mit dem Lenkradskelett verbunden, daß sie in Richtung der Längsachse der Lenksäule bewegbar ist, d.h. daß sie schwimmend gelagert ist. Durch Niederdrücken der Kontaktbrücke entgegen der Wirkung der Druckfedern werden Hupenkontakte geschlossen. Die Kontaktbrücke ist zu ihrer Betätigung im allgemeinen mit der Abdeckkappe für den im Lenkrad auf der Kontaktbrücke angeordneten Airbag verbunden, so daß durch Niederdrücken der Abdeckkappe die Hupe betätigt wird.

Der Nachteil dieser Anordnung besteht darin, daß durch die Verwendung von Bolzen für die Befestigung der Kontaktbrücke unerwünschte Material- und Montagekosten entstehen.

Weiter ist aus der US-A-5 738 369 ein Lenkrad mit Airbag und Hupenschalter, gemäß dem Oberbegriff des Anspruchs 1, bekannt. Bei diesem ist eine Kontaktbrücke mit federnden Laschen versehen, die Durchbrüche aufweisen. Den Durchbrüchen sind an der Lenkradnabe Haken zugeordnet, die zur Befestigung der Kontaktbrücke an der Nabe in diese Durchbrüche eingreifen.

Der Erfindung liegt die Aufgabe zugrunde, die Material- und Montagekosten für die Lagerung einer Kontaktbrücke am Lenkrad zu senken.

Erfindungsgemäß wird das gemäß den Merkmalen des Anspruchs 1 erreicht.

Bei einem Lenkrad mit Kontaktbrücke, die federnd gelagert und in Richtung der Längsachse der Lenksäule bewegbar ist, insbesondere zur Betätigung der Hupe, wobei das Lenkradskelett mindestens eine Halterung für den Eingriff mindestens eines ersten Abschnittes der Kontaktbrücke aufweist und die Kontaktbrücke in der Eingrifflage durch mindestens einen zweiten Abschnitt der Kontaktbrücke arretierbar ist, ist erfindungsgemäß für die Arretierung der Kontaktbrücke am Lenkradskelett eine Rampe angeordnet, der an der Kontaktbrücke ein verformbares Arretierteil zugeordnet ist, das in der Arretierstellung entlang der Rampe in Richtung der Längsachse der Lenksäule bewegbar ist.

Der Vorteil dieser Befestigungsart der Kontaktbrücke besteht darin, daß keine Bolzen oder Schrauben für das Befestigen der Kontaktbrücke erforderlich sind, sondern daß die Befestigung durch geringfügige Änderungen am Lenkradskelett und an der Kontaktbrücke durch diese Baugruppen selbst erfolgt.

Vorzugsweise ist die Halterung taschenförmig ausgebildet, wobei als Tasche insbesondere der Raum zwischen einem Speichenfuß und einem Vorsprung der zugehörigen Speiche dient.

In einer Ausführungsform sind drei Halterungen so angeordnet, daß sie die Ecken eines Dreiecks bilden.

Das Arretierteil ist für das Einbringen in die Arretierstellung vorzugsweise plastisch verformbar. Das Arretierteil gewährleistet die Fixierung der Kontaktbrücke am Lenkradskelett.

Eine weitere Ausgestaltung sieht vor, daß die Eingriffsabschnitte und das Arretierteil mit Kunststoff ummantelt sind. Diese Ummantelung dient einerseits als elektrische Isolation und gewährleistet die geräuscharme Bewegung des Arretierteils entlang der Rampe.

Für die federnde Lagerung der Kontaktbrücke ist zwischen dieser und dem Lenkradskelett im Bereich jeder Halterung in einer Ausführungsform eine Druckfeder vorgesehen, wobei die Druckfedern vorzugsweise als Zylinder- oder Spiralfedern um die Kontakte der Kontaktbrücke und zugeordneten Gegenkontakte des Lenkradskeletts herum angeordnet sind.

Die Erfindung soll in einem Ausführungsbeispiel anhand von Zeichnungen erläutert werden. Es zeigen:
- Fig.1: ein Airbaglenkrad mit einer bekannten Art der Befestigung einer Kontaktbrücke am Lenkradskelett;
- Fig. 2: der Mittelbereich eines erfindungsgemäß geänderten Lenkradskeletts;
- Fig. 3: eine erfingungsgemäß geänderte Kontaktbrücke;
- Fig. 4: einen Schnitt A - A durch die Figuren 2 und 3 im zusammengebauten Zustand des Lenkradskeletts und der Kontaktbrücke.

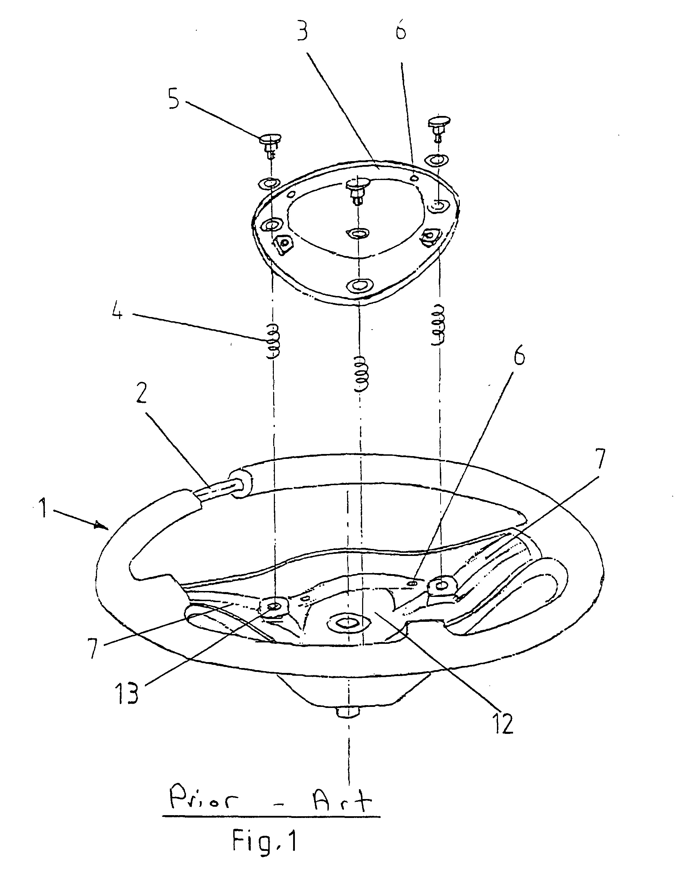

In der Figur 1 ist eine bekannte Art der Befestigung einer Kontaktbrücke 3 an einem Airbaglenkrad 1 dargestellt. Das Airbaglenkrad 1 weist ein Lenkradskelett auf, das aus einem Lenkradkranz 2, Speichen 7 und einen mittleren Bereich 12 des Lenkradskeletts besteht. Die Kontaktbrücke 3 ist mittels dreier Bolzen 5 unter Zwischenlage von Druckfedern 4 mit dem mittleren Bereich 12 des Lenkradskeletts verbunden. Dabei werden die Bolzen 5 nur bis zu einer solchen Tiefe in Bohrungen 13 eingeschraubt, daß sich Kontaktniete 6 der Kontaktbrücke 3 und des mittleren Bereichs 12 des Lenkradskeletts nicht berühren. Die Kontakte werden zur Betätigung der Hupe erst durch Niederdrücken der Kontaktbrücke entgegen der Wirkung der Druckfedern 4 geschlossen. Die Kontaktbrücke 3 ist hierzu mit einer nicht dargestellten Abdeckkappe für den ebenfalls nicht dargestellten Airbag verbunden. Die Kontaktbrücke wird also vom Fahrer durch das Niederdrücken der Abdeckkappe betätigt.

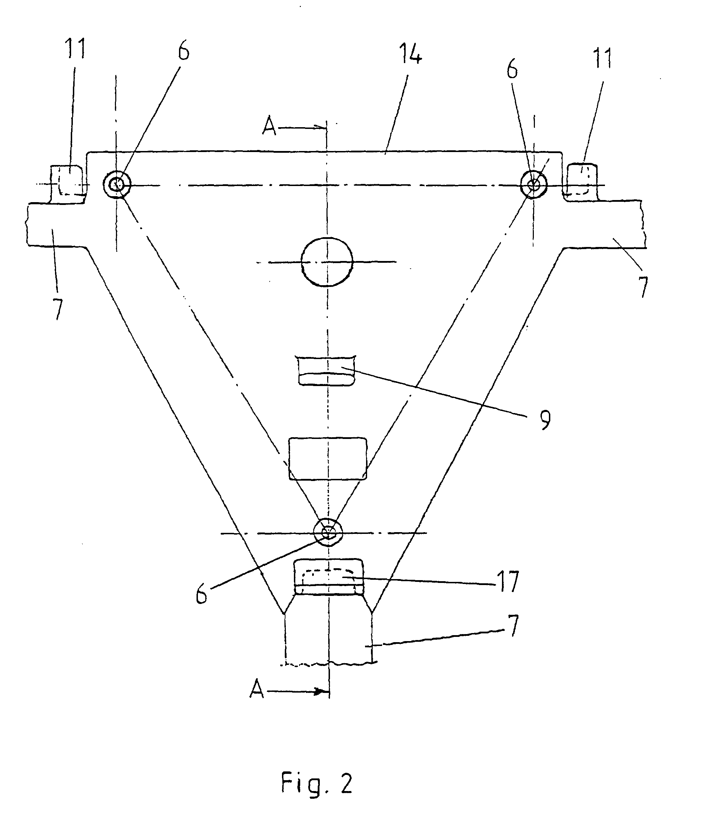

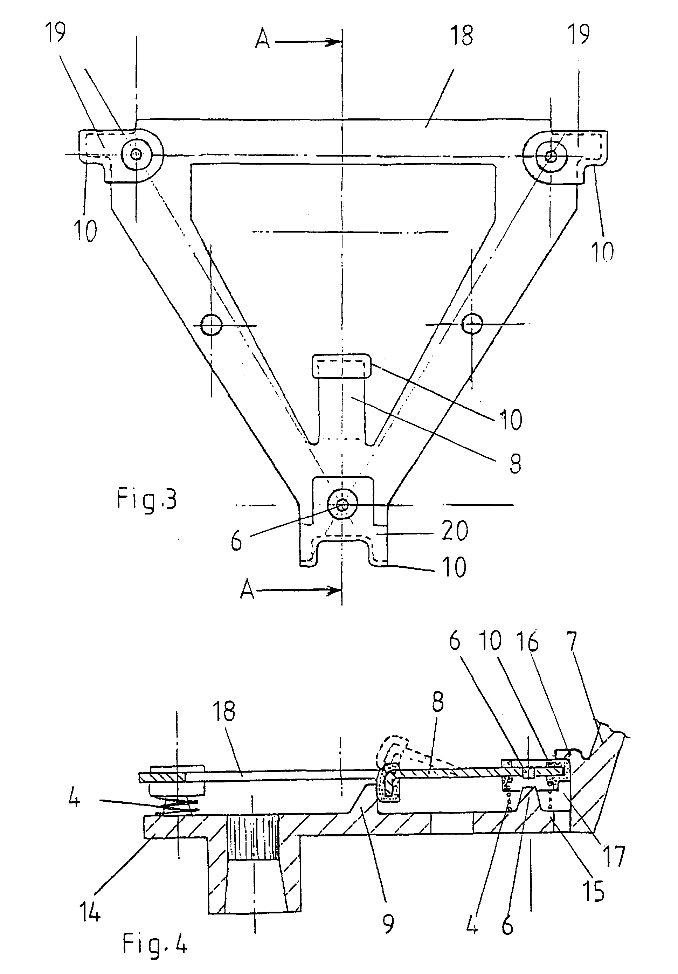

Der in der Fig. 2 dargestellte mittlere Bereich 14 des erfindungsgemäß veränderten Lenkradskeletts weist zwei Taschen 11 und eine breitere Tasche 17 auf, die durch einen Raum zwischen dem Fuß 15 jeder Speiche 7 und einem Vorsprung 16 jeder Speiche 7 gebildet wird (Fig. 4). Weiterhin sind eine Rampe 9 und Kontakte 6 vorgesehen.

In der Fig. 3 ist eine erfindungsgemäße Kontaktbrücke 18, die dem mitteleren Bereich 14 des Lenkradskeletts zugeordnet ist, dargestellt. Die Kontaktbrücke 18 weist zwei Abschnitte 19, die den Taschen 11 zugeordnet sind, und einen Abschnitt 20 auf, der der Tasche 17 zugeordnet ist. Weiterhin weist die Kontaktbrücke 18 ein plastisch verformbares Arretierteil 8 auf, das der Rampe 9 des mittleren Bereichs 14 zugeordnet ist. Die Abschnitte 19, der Abschnitt 20 und das Arretierteil 8 sind zumindest teilweise mit einer Kunststoffschicht 10 umgeben.

Die Fig. 4 zeigt den mittleren Bereich 14 des Lenkradskeletts und die Kontaktbrücke 18 im montierten Zustand. Die Kontaktbrücke 18 wird unter Zwischenlage der zylindrischen Druckfedern 4 von der Seite her in die Taschen 11 bzw die Tasche 17 eingeschoben. Dabei hat das Arretierteil 8 die in der Fig. 4 gestrichelt dargestellte Stellung. Nach Erreichen der Endlage wird das Arretierteil 8 hinter die Rampe 9 gedrückt, wie es in der Fig. 4 ebenfalls dargestellt ist. Damit kann die Kontaktbrücke 18 aus dem Lenkradskelett nicht mehr zurückgeschoben werden. In der Ruhelage werden die Abschnitte 19 und der Abschnitt 20 der Kontaktbrücke 18 durch die Druckfedern 4 gegen die Vorsprünge 16 des Lenkradskeletts gedrückt und die Kontakte 6 liegen mit einem Zwischenraum gegenüber. Beim Niederdrücken der Kontaktbrükke 18 gleitet das Arretierteil 8 entlang der Rampe 9 mit nach unten. Diese Bewegung wird durch die Kunstoffummantelung 10 erleichtert.

## Patentansprüche

1. Lenkrad mit Kontaktbrücke, die federnd gelagert und in Richtung der Längsachse der Lenksäule bewegbar ist, insbesondere zur Betätigung der Hupe, wobei das Lenkradskelett (14) mindestens eine Halterung (11, 17) für den Eingriff mindestens eines ersten Abschnittes (19, 20) der Kontaktbrücke (18) aufweist und wobei die Kontaktbrücke (18) in der Eingrifflage durch mindestens einen **zweiten** Abschnitt (8) der Kontaktbrücke (18) arretierbar ist,
**dadurch gekennzeichnet,**
**daß** für die Arretierung der Kontaktbrücke (18) am Lenkradskelett eine Rampe (9) angeordnet ist, der an der Kontaktbrücke (18) ein verformbares Arretierteil (8) zugeordnet ist, das in der Arretierstellung entlang der Rampe (9) in Richtung der Längsachse der Lenksäule bewegbar ist.

2. Lenkrad nach Anspruch 1, **dadurch gekennzeichnet, daß** die Halterung (11, 17) taschenförmig ausgebildet ist.

3. Lenkrad nach Anspruch 2, **dadurch gekennzeichnet, daß** als Tasche (11, 17) der Raum zwischen einem Speichenfuß (15) und einem Vorsprung (16) der zugehörigen Speiche (7) dient.

4. Lenkrad nach mindestens einem der vorhergehenden Ansprüche, **dadurch gekennzeichnet, daß** drei Halterungen (11, 17) die Ecken eines Dreiecks bilden.

5. Lenkrad nach mindestens einem der vorhergehenden Ansprüche, **dadurch gekennzeichnet, daß** das Arretierteil (8) plastisch verformbar ist.

6. Lenkrad nach mindestens einem der vorhergehenden Ansprüche, **dadurch gekennzeichnet, daß** die Eingriffsabschnitte (19, 20) und das Arretierteil (8) mit Kunststoff ummantelt sind.

7. Lenkrad nach mindestens einem der vorhergehenden Ansprüche, **dadurch gekennzeichnet, daß** für die federnde Lagerung der Kontaktbrücke (18) zwischen dieser und dem Lenkradskelett im Bereich jeder Halterung (11, 17) eine Druckfeder (4) vorgesehen ist.

8. Lenkrad nach Anspruch 7, **dadurch gekennzeichnet, daß** die Druckfedern (4) als Zylinder- oder Spiralfedern um die Kontakte (6) der Kontaktbrücke (18) und zugeordneten Gegenkontakte (6) des Lenkradskeletts herum angeordnet sind.

## Claims

1. Steering wheel with moving contact, which is spring-supported and movable in the direction of the longitudinal axis of the steering column, especially for actuation of the horn, the steering wheel skeleton (14) having at least one mount (11, 17) for the engagement of at least one first section (19, 20) of the moving contact (18), and the moving contact (18) being lockable in the engaged position by at least one second section (8) of the moving contact (18),
**characterized in that,**
for locking the moving contact (18), a ramp (9) is arranged on the steering wheel skeleton, to which ramp a deformable locking part (8) on the moving contact (18) is assigned, the said locking part in the locking position being movable along the ramp (9) in the direction of the longitudinal axis of the steering column.

2. Steering wheel according to Claim 1, **characterized in that** the mount (11, 17) is of pocket-shaped design.

3. Steering wheel according to Claim 2, **characterized in that** the space between a spoke foot (15) and a projection (16) of the associated spoke (7) serves as pocket (11, 17).

4. Steering wheel according to at least one of the preceding claims, **characterized in that** three mounts (11, 17) form the angles of a triangle.

5. Steering wheel according to at least one of the preceding claims, **characterized in that** the locking part (8) is plastically deformable.

6. Steering wheel according to at least one of the preceding claims, **characterized in that** the engagement sections (19, 20) and the locking part (8) are coated with plastic.

7. Steering wheel according to at least one of the preceding claims, **characterized in that** for the sprung support of the moving contact (18) a compression spring (4) is provided between the said contact and the steering wheel skeleton in the area of each mount (11, 17).

8. Steering wheel according to Claim 7, **characterized in that** the compression springs (4) are arranged as cylindrical or helical coil springs around the contacts (6) of the moving contact (18) and associated opposing contacts (6) of the steering wheel skeleton.

## Revendications

1. Volant de direction doté d'un pont de contact monté élastiquement et mobile en direction de l'axe longitudinal de la colonne de direction, en particulier pour actionner l'avertisseur sonore, l'ossature de volant (14) comprenant au moins une monture (11, 17) pour l'engagement d'au moins un premier tronçon (19, 20) du pont de contact (18), et le pont de contact (18) pouvant être arrêté, en position d'engagement, par au moins un deuxième tronçon (8) du pont de contact (18),
**caractérisé en ce que**,
pour l'arrêt du pont de contact (18), il est prévu une rampe (9) qui est agencée sur l'ossature de volant et à laquelle est associée, sur le pont de contact (18), une partie d'arrêt (8) déformable qui est mobile en position d'arrêt le long de la rampe (9) en direction de l'axe longitudinal de la colonne de direction.

2. Volant selon la revendication 1, **caractérisé en ce que** la monture (11, 17) est réalisée en forme de poche.

3. Volant selon la revendication 2, **caractérisé en ce que** c'est l'espace entre un pied de rayon (15) et une saillie (16) du rayon associé (7) qui set de poche (11, 17).

4. Volant selon au moins l'une des revendications précédentes, **caractérisé en ce que** trois montures (11, 17) forment les coins d'un triangle.

5. Volant selon au moins l'une des revendications précédentes, **caractérisé en ce que** la partie d'arrêt (8) est plastiquement déformable.

6. Volant selon au moins l'une des revendications précédentes, **caractérisé en ce que** les tronçons d'engagement (19, 20) et la partie d'arrêt (8) sont enrobés de matière synthétique.

7. Volant selon au moins l'une des revendications précédentes, **caractérisé en ce que**, pour le montage élastique du pont de contact (18), il est prévu un ressort de compression (4) entre celui-ci et l'ossature de volant dans la zone de chaque monture (11, 17).

8. Volant selon la revendication 7, **caractérisé en ce que** les ressorts de compression (4) sont agencés sous forme de ressorts cylindriques ou hélicoïdaux autour des contacts (6) du pont de contact (18) et autour des contre-contacts associés (6) de l'ossature de volant.
